# EUROPÄISCHE PATENTANMELDUNG

(11) **EP 2 444 576 A2**
(43) Veröffentlichungstag der Anmeldung: **25.04.2012**
(21) Anmeldenummer: 11184133.4
(22) Anmeldetag: 06.10.2011
(51) Int. Cl.: E05D 5/02, E05D 7/04, E04B 1/76

(54) **Montagekonsole**

(30) Priorität: 20.10.2010 CH 17112010
(71) Anmelder: Dosteba AG, 8184 Bachenbülach (CH)
(72) Erfinder: Maag, Ulrich, 8184 Bachenbülach (CH)
(74) Vertreter: Hasler, Erich

(57) **Zusammenfassung**

Montagekonsole (11, 52) zur Montage von Bauteilen, insbesondere von Kloben für Fensterläden, an einem Baukörper beinhaltend
- eine Grundplatte (15) mit mindestens einer Aufnahme (33) für ein Befestigungsmittel (19) zur Befestigung der Grundplatte (15) an einem Baukörper (13), wobei die Seite der Grundplatte (15), welche an den Baukörper (13) anliegt, als Befestigungsebene definiert ist, und
- ein der Grundplatte (15) aufsetzbares Tragelement (17) mit einer Konsolenfläche (27), welche an der der Grundplatte (15) abgewandten Seite des Tragelements (17) liegt, wobei im Wesentlichen parallel zur Konsolenfläche (27) sich eine mit dem Tragelement (17) gekoppelte Montageebene erstreckt,

dadurch gekennzeichnet,
dass zwischen Grundplatte (15) und Tragelement (17) mehrere verstellbare Distanzmit-tel angeordnet sind, über welche Abstand und Neigung zwischen Befestigungsebene und Montageebene einstellbar ist.

## Beschreibung

### Gebiet der Erfindung

Die Erfindung betrifft eine Montagekonsole zur Montage von Bauteilen, insbesondere von Kloben für Fensterläden und Tragwinkel für Schiebeläden, an einem Baukörper gemäss Oberbegriff des Anspruchs 1. Die Montagekonsole dient insbesondere zur wärmebrückenfreien Montage von Bauteilen an einem Baukörper. Hierbei werden insbesondere Kloben für Fensterläden und Tragwinkel für Schiebeläden an Fassaden mit einem Aussenwärmedämmverbundsystem montiert.

### Stand der Technik

Die Verwendung von schwenkbaren Fensterläden ist traditionsreich. Die Fensterläden werden hierbei an einem Kloben, schwenkbar aufgehängt. Der Kloben muss zuvor fest in der Gebäudewand oder in der Laibung befestigt werden. Die Befestigung des Klobens ist relativ einfach, sofern die Aussenfassade oder Laibung aus festem Baumaterial, wie Mauerwerk oder Beton, besteht. Moderne Bauwerke sind heute mehrheitlich aussen isoliert, d.h. mit einem Aussenwärmedämmverbundsystem (VWDS). Werden an solchen Gebäuden Fensterläden an der Baustruktur befestigt, entsteht eine Wärmebrücke über Metallbefestigungsteile und Baustruktur, die einen starken Wärmeabfluss vom Innern des Gebäudes nach aussen bewirkt. An der Dämmschicht selbst können die Kloben für Fensterläden nicht angebracht werden, da die Festigkeit der Dämmschicht dies nicht zulässt. Es besteht somit ein Bedarf für ein weitestgehend wärmebrückenfreies Befestigungssystem für Kloben, das die Dämmwirkung nicht vermindert und stabil befestigt werden kann.

### Aufgabe der Erfindung

Bereitstellen einer Montagekonsole zur Montage von Bauteilen an einen Baukörper. Insbesondere soll eine Montagekonsole bereitgestellt werden, welche geeignet ist für Fassaden, die mit einem Aussenwärmedämmverbundsystem (VWDS) gedämmt werden. Eine geeignete Montagekonsole soll sicher verankert sein. Zudem soll die Montagekonsole selbst wackelfrei sein sowie eine wackelfreie Montage von Bauteilen erlauben. Im Weiteren soll eine Montagekonsole bereitgestellt werden, die eine wärmebrückenfreie Fremdmontage ermöglicht.

### Beschreibung

Erfindungsgemäss wird die Aufgabe durch die Bereitstellung einer Montagekonsole zur Montage von Bauteilen, insbesondere von Kloben für Fensterläden, an einem Baukörper gelöst, die folgende Merkmale beinhaltet
- eine Grundplatte mit mindestens einer Aufnahme für ein Befestigungsmittel zur Befestigung der Grundplatte an einem Baukörper, wobei die Seite der Grundplatte, welche an den Baukörper anliegt, als Befestigungsebene definiert ist, und
- ein der Grundplatte aufsetzbares Tragelement mit einer Konsolenfläche, welche an der der Grundplatte abgewandten Seite des Tragelements liegt, wobei parallel zur Konsolenfläche sich eine mit dem Tragelement gekoppelte Montageebene erstreckt,
und dadurch gekennzeichnet ist, dass zwischen Grundplatte und Tragelement mehrere verstellbare Distanzmittel angeordnet sind, über welche Abstand und Neigung zwischen Befestigungsebene und Montageebene einstellbar ist.

Aufgrund dieses Aufbaus der Montagekonsole ist es möglich, durch Verstellen der Distanzmittel Neigung und Abstand der Konsolenfläche und der mit ihr gekoppelten Montageebene bezüglich der Befestigungsebene derart einzustellen, dass die Montageebene in Bezug auf eine gewünschte Dämmschichtoberfläche (auch Dämmschichthöhe genannt) ausgerichtet werden kann. Das heisst, dass die Bauteilposition - wie zum Beispiel seine Höhe und Ausrichtung - in Bezug zum Baukörper und somit zur Dämmschichtoberfläche einstellbar, bezugsweise ausrichtbar ist. An einer fertig gedämmten Wand liegt die Montageebene somit zweckmässigerweise auf gleicher Ebene mit der Dämmplattenoberfläche. Nach dem Verputzen ist die Montagekonsole nicht mehr zu sehen; nur ein an ihr gegebenenfalls befestigtes Montagemittel bleibt sichtbar.

Im Weiteren folgt aus dem oben beschriebenen Montagekonsolenaufbau, dass die Montageebene sowie ein nach ihr ausgerichtetes Montagemittel nicht direkt mit einem Befestigungsmittel in Kontakt stehen. Die Ausbildung einer Wärmebrücke wird dadurch verhindert. Werden Grundplatte und Tragelement aus isolierenden Materialien hergestellt, wie etwa Kunststoff und/oder Holz, kann der Wärmeverlust über die Montagekonsole stark verringert werden. Tatsächlich ist der Wärmeverlust dann nicht mehr wesentlich grösser als jener über mit üblichem Dämmmaterial belegte Wände.

Zweckmässigerweise sind mindestens drei Distanzmittel vorhanden, welche zumindest eine Dreipunktauflage zwischen Tragelement und Grundplatte bilden. Hierdurch ist die Ausrichtung der Montageebene bezüglich der gewünschten - und zu einem späteren Zeitpunkt gesetzten - Dämmplattenschicht optimal durchführbar.

Distanzmittel können zum Beispiel als verschiebbare Keile ausgebildet werden, über welche Tragelement und Grundplatte auseinandergedrückt werden. Vorteilhafterweise sind die Distanzmittel jedoch als Gewindeschrauben ausgestaltet. Diese Distanzmittel sind per Schraubenzieher oder Mehrkantschlüssel leicht verstellbar. Um die Zugänglichkeit der Gewindeschraube zu verbessern, kann die Schraube derart ausgeführt werden, dass das Verstellwerkzeug auch am kopflosen Schaftende einen Angriffspunkt findet.

Die Grundplatte weist vorteilhafterweise eine Dicke von mindestens 15 mm, bevorzugt 15-25 mm, auf. Durch diese Mindestdicke können Befestigungsmittel genügend tief eindringen, wodurch zum einen eine stabile Schraubverbindung mit dem Tragelement gewährleistet werden kann und zum anderen ein Befestigungsmittel zur Verankerung im Baukörper die Grundplattenhöhe tragelementseitig nicht überragt.

Zweckmässigerweise weist die Grundplatte mit aufgesetztem Tragelement eine Dicke von 40-300 mm, bevorzugt 60-300 mm, auf. Diese Werte entsprechen den üblichen Wärmedämmdicken.

Die Grundplatte weist vorteilhafterweise Verstrebungen auf. Hierzu zählen grobe Balkenverstrebungen und/oder feinere Waben- oder Lochstrukturen. Die Grundplatte ist vorteilhafterweise mit einer Lochstruktur, insbesondere in Kombination mit einer hinsichtlich ihrer Dimension gröberen Balkenverstrebung, ausgestattet, wobei die Löcher senkrecht zur Ausdehnungsebene der Grundplatte verlaufen und die Mehrheit der Löcher nicht durchgehend ist. Diese Grundplattenausführungen bieten vorteilhafterweise Stabilität und gute Wärmedämmeigenschaften.

Im Weiteren besteht die Grundplatte vorzugsweise aus einem Spritzkunststoff. Spritzkunststoffteile sind schnell, billig, in verschiedensten Formen und in grossen Mengen herstellbar. Zudem wirken die Kunststoffteile bei geeigneter Konstruktion, d.h. einer Konstruktion mit vielen Luftkammern, ähnlich wärmedämmend wie Dämmstoffe.

Vorteilhafterweise ist die Aufnahme in der Grundplatte als mindestens ein durchgehendes Loch mit Ansenkung ausgebildet. Hierdurch kann die Wärmeübertragung über ein im Baukörper verankertes Befestigungsmittel reduziert werden. Zudem bleibt ein aufgesetztes Tragelement gegenüber der Grundplatte in verankertem Zustand verschiebbar.

Die Montagekonsole beinhaltet zweckmässigerweise ein Befestigungsmittel. Dieses besteht weiter vorzugsweise aus einem Dorn oder Dübel. Damit kann eine schnelle, übliche Verankerungsmethode zur Verankerung eingesetzt werden.

Zur festen Verankerung des Grundelements wird vorteilhafterweise ein Dorn oder Dübel bestehend aus Schaftteil und Kopfteil verwendet, wobei das Kopfteil breiter als das Schaftteil und kugelabschnittsförmig ausgebildet ist. Hierdurch gelingt unabhängig vom kleinsten Winkel zwischen Befestigungsmittel und Befestigungsebene, oder anders ausgedrückt unabhängig von der Lage des Befestigungsmittels im Baukörper, eine sichere Verankerung.

Es ist vorteilhaft einen Dorn oder Dübel ausgeführt als Hülse mit Durchbrüchen zu verwenden. Durch die Durchbrüche ist es möglich, Mörtel in die Zwischenräume zwischen Befestigungsmittel und Baukörper zu spritzen oder zu pumpen. Dadurch wird die Festigkeit der Verankerung erhöht.

Vorteilhafterweise weist das Tragelement Durchgangslöcher erster Art zur Aufnahme von Verbindungsmitteln zur gegenseitigen kraftschlüssigen Verbindung von Tragelement und Grundplatte auf. Durch die vorgefertigten Durchgangslöcher kann der Zeitaufwand bei der Befestigung am Baukörper reduziert werden. Ein Suchen nach den günstigsten Befestigungspositionen in der Grundplatte entfällt und Fehler werden reduziert.

Vorteilhafterweise weist das Tragelement Durchgangslöcher zweiter Art zur Aufnahme der Distanzmittel auf. Auch hier entfällt ein zeitraubendes Suchen nach den optimalen Setzpositionen der Distanzmittel.

Die Durchgangslöcher zweiter Art zur Aufnahme der Distanzmittel sind mit Vorteil mit Innengewinde ausgeführt. Hierdurch sind die Distanzmittel genauer setzbar und in der Höhe justierbar.

Optional ist das Tragelement mit mindestens einem Montagemittel zur Montage eines Bauteils (z.B. eines Kloben mit Fensterladen) ausgeführt. Durch das Montagemittel kann ein zu montierendes Bauteil schnell und unkompliziert am Baukörper angebracht werden.

Vorteilhafterweise weist das Tragelement auf mindestens einer von zwei sich gegenüberliegenden und zur Konsolenfläche senkrecht liegenden Seiten einen Tragelement fortsatz oder eine Tragelementverlängerung zur Befestigung eines Montagemittels auf. Das Montagemittel ist an der Montageebene ausgerichtet. Diese Anordnung hat den Vorteil, dass Montage und Befestigung örtlich getrennt sind. Hierdurch kann verhindert werden, dass metallische Befestigungsmittel mit montierten metallischen Bauteilen in direktem wärmeleitendem Kontakt stehen.

In einer Ausführungsart ist das Montagemittel so an der Montageebene ausgerichtet, dass ein zu montierendes Bauteil, wie z.B. ein Fensterladenkolben senkrecht zur Montageebene eingesteckt oder eingeschraubt werden kann. In einer anderen Ausführungsart bildet das Montagemittel mit der Montageebene eine gemeinsame Ebene, auf welcher z.B. Schiebeladenschienen montiert werden können.

Das Tragelement weist eine Zugschiene auf, die ein Zugelement aufnimmt, das wiederum zwei sich ineinanderfügbare Backenflansche aufnimmt. Dieser Baukastenaufbau ist vorteilhaft, da alle Teile im Spritzguss hergestellt werden können.

Die Backenflansche sind mit Fortsätzen in Form von Teilen einer Gewindehülse ausgeführt, wobei die Backenflansche mit Fortsätzen formschlüssig ineinanderfügbar sind und zusammengesetzt eine Gewindehülse bilden. Die Herstellung einer Hülse mit Innengewinde durch ein Spritzgussverfahren ist ökonomisch nur zu bewerkstelligen, wenn erst zwei Halbhülsen mit Innengewinde hergestellt werden, die danach formschlüssig zusammengelegt werden.

Vorteilhafterweise besteht das Montagemittel aus einer Gewindehülse und einer Schutzkappe. Die Schutzkappe hält die beiden Halbhülsen zusammen und garantiert somit Stabilität und Sicherheit.

Alternativ kann das Montagemittel aus einer formstabilen Struktur mit Waben- oder Lochstruktur und/oder mit Verstrebungen bestehen. Diese Struktur erlaubt ein Fixieren von Kloben oder Schienen am Montagemittel über Schrauben. Die Schrauben werden vom Monteur bei der Montage der Fensterläden angebracht. Durch die Wabenoder Lochstruktur bietet das Montagemittel einen gewissen Dämmschutz ähnlich dem üblichen Dämmmaterial.

Das Tragelement weist vorteilhafterweise auf zwei weiteren sich gegenüberliegenden und zur Konsolenfläche senkrecht liegenden Seitenflächen Justierelemente zur gegenseitigen Positionierung von Grundplatte und Tragelement auf. Hierdurch wird eine optimale Positionierung der zu montierenden Bauteile ermöglicht. Das Tragelement kann nämlich in horizontaler und vertikaler Richtung entlang der Baukörperoberfläche verschoben, justiert und behelfsweise fixiert werden. Insbesondere können zwei oder mehrere Montagemittel auf verschiedenen Montagekonsolen entlang der Baukörperoberfläche gegeneinander genau ausgerichtet und behelfsweise fixiert werden. Diese Fixierung durch die Justierelemente ist eigentlich nur nötig bis Tragelement und Grundplatte an den Durchgangslöchern erster Art endgültig, zum Beispiel über Verschrauben, fixiert werden.

Die erfindungsgemässe Montagekonsole wird vorteilhafterweise zur wärmebrückenfreien Montage von Bauteilen an einem Baukörpern mit einem Aussenwärmedämmverbundsystem verwendet, indem ein Bauteil am Tragelement so angebracht wird, dass Befestigungsmittel und Bauteil durch eine Isolation, wie z.B. ein Luftkissen oder Dämmmaterial getrennt sind.

Vorteilhafterweise wird das obige Montageverfahren zur Montage von Kloben für Fensterläden an Fassaden mit einem Aussenwärmedämmverbundsystem verwendet. Dieses Montageverfahren an Fassanden mit Aussenwärmedämmverbundsystem hat den Vorteil, dass durch die Montage keine Wärmebrücken vom Innern des Gebäudes nach aussen gebildet werden. Die Energieeffizienz eines Hauses wird dadurch gesteigert und lokale Feuchtigkeitsschäden an der Innenseite des Mauerwerks, d.h. raumseitig, werden vermieden.

Optional werden weitere Bauteile, insbesondere Aluminiumprofile zur Dämmmaterialverstärkung, am Tragelement angebracht. Diese dienen zur Verstärkung und Qualitätssteigerung von Kanten am Baukörper, insbesondere dann, wenn Bauteile in nächster Nähe von Kanten montiert werden sollen. Alternativ können Tragelementfortsatz und Backenflansche derart ausgebildet werden, dass sie ein Aluminiumprofil aufnehmen, das zur genauen Einstellung des Leibungslichtmasses dient.

Nachfolgend wird die Erfindung unter Bezugnahme auf die Figuren in schematischer Darstellung näher im Detail beschrieben. Es zeigt:
- Figur 1:: Perspektivische Ansicht einer auf einem transparent dargestellten Baukörper angeordneten Montagekonsole bestehend aus Grund-platte und darauf angeordnetem Tragelement und darauf ange-brachtem Montagemittel und Verstärkungselement;
- Figur 2:: Perspektivischer Schnitt durch die Montagekonsole der Figur 1 zusätzlich ein Distanzmittel und ein Backenflansch zeigend;
- Figur 3:: Perspektivische Unteransicht der Montagekonsole von Figur 1 mit Befestigungsmittel, Grundplatte, Tragelement, Zugelement, Flan-sche und Verstärkungselement;
- Figur 4:: Perspektivische Ansicht einer Schutzkappe;
- Figur 5:: Perspektivische Ansicht eines Verstärkungselements;
- Figur 6:: Montageseitige perspektivische Ansicht der Grundplatte;
- Figur 7:: Perspektivische Ansicht eines Befestigungsmittels;
- Figur 8:: Perspektivische Ansicht eines Distanzmittels;
- Figur 9:: Montageseitige perspektivische Ansicht des Tragelements;
- Figur 10:: Perspektivische Ansicht eines Zugelements;
- Figur 11:: Perspektivische Ansicht eines Backenflansches;
- Figur 12:: Perspektivische Ansicht eines weiteren Backenflansches;
- Figur 13:: Baukörperseitige perspektivische Ansicht der Grundplatte;
- Figur 14:: Grundplattenseitige perspektivische Ansicht des Tragelements;
- Figur 15: Ansicht einer auf einem Baukörper angeordneten Montagekonsole bestehend aus Grundplatte und darauf angeordnetem Tragelement und darauf angebrachtem Montagemittel.

### Montagekonsole

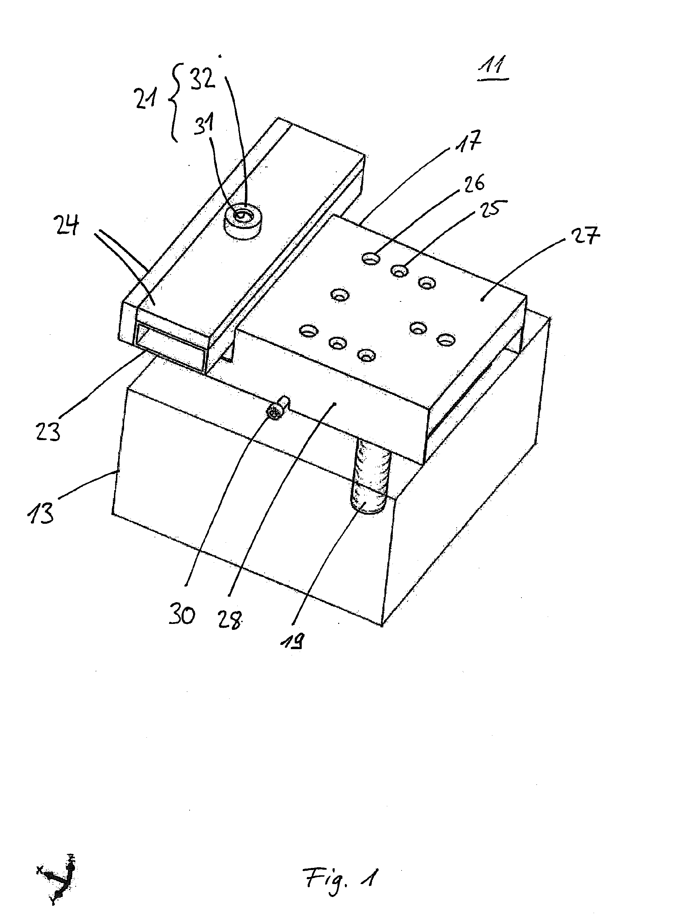

Eine Ausführungsform einer Montagekonsole 11 zur Montage von Bauteilen, wie zum Beispiel von Kloben für Fensterläden (hier nicht gezeigt) an einem Baukörper 13, ist in Figuren 1-3 dargestellt. Gemäss Figur 1 weist die Montagekonsole hierbei die folgenden Elemente auf: eine Grundplatte 15, ein auf der Grundplatte aufgesetztes Tragelement 17 und ein Befestigungsmittel 19 zur Befestigung der Grundplatte 15 an einem Baukörper, insbesondere an einer Fassade. Im Weiteren - abhängig vom zu montierenden Bauteil - können weitere Elemente vorhanden sein. Im vorliegenden Beispiel sind dies ein Montagemittel 21 für das zu montierende Bauteil und ein Verstärkungselement 23. Montagemittel 21 und Verstärkungselement 23 sind am Tragelement 17 befestigt. Das Verstärkungselement 23 dient der strukturellen Verstärkung der Dämmung, zum Beispiel an Leibungskanten. Beidseitig einer Fensteröffnung angebracht (hier nicht gezeigt) entspricht der Abstand zwischen zwei Verstärkungselementen 23 mit Dämmmaterial 24 dem vorgebebenen Leibungslichtmass des Fensters.

Grundplatte 15 und Tragelement 17 sind so ausgebildet, dass diese miteinander verschraubt werden können. Hierzu sind im Tragelement sechs Durchgangslöcher 25 (im Weiteren auch Durchgangslöcher erster Art genannt) zur Aufnahme von Fixierschrauben angelegt. Diese Löcher 25 sind angesenkt, um Platz für die Schraubenköpfe zu machen. Die Grundplatte 15 ist mit mindestens 15 mm Stärke so ausgeführt, dass Fixierschrauben, die in Durchgangslöchern 25 eingeführt werden, genügend tief in die Grundplatte eingeschraubt werden können, um einen kraft- und formschlüssigen Zusammenhalt von Grundplatte 15 und Tragelement 17 zu erzielen.

Grundplatte 15 und Tragelement 17 können aus Kunststoff bestehen, vorteilhafterweise aus Spritzkunststoff und/oder aus glasfaserverstärktem Spritzkunststoff. Zur gegenseitigen Fixierung von Grundplatte 15 und Tragelement 17 können Blech- oder Holzschrauben benutzt werden. Mit solchen Schrauben ist ein Vorbohren der Grundplatte vor dem Setzen der Schrauben nicht nötig. Die Anzahl der nötigen Schrauben hängt zumindest von Grösse und Gewicht der zu montierenden Bauteile und von den Schraubenstärken ab. Bei zur Fensterladenmontage bestimmten Montagekonsolen genügen im Allgemeinen drei Holzschrauben mit je einem Durchmesser von 4-5 mm. Fünf bis sechs Schrauben werden bei schweren Fensterladen nötig.

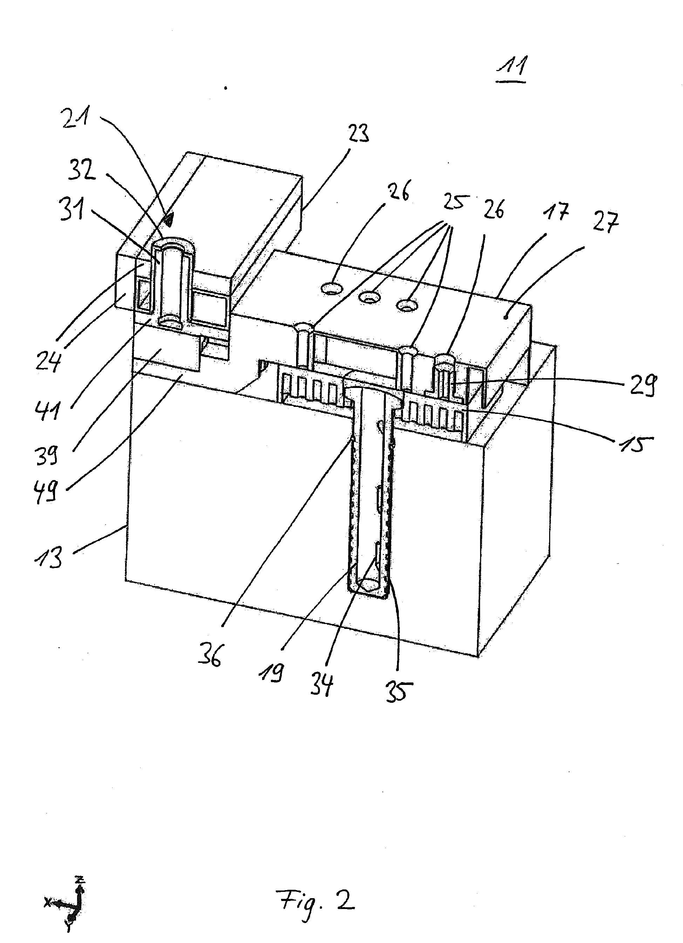

Weitere drei Durchgangslöcher 26 (im Weiteren auch Durchgangslöcher zweiter Art genannt) sind ohne Ansenkung ausgebildet. Diese dienen zur Aufnahme eines Distanzmittels 29 (Figur 2), über welches Abstand und Neigung zwischen Grundplatte 15 und Tragelement 17 in Z-Achsenrichtung einstellbar sind bevor die oben erwähnten Schrauben festgezogen werden.

Grundplatte 15 und Tragelement 17 sind so ausgebildet, dass das Tragelement 17 mit grosszügigem Spiel über alle vier Seiten der Grundplatte 15 hinausragt. Dadurch ist das Tragelement 17 in losem Zustand gegenüber der Grundplatte 15 in X-Y-Richtung verschiebbar. Seitlich des Tragelements 17 sind an zwei gegenüberliegenden Seiten Justierelemente 30 in Form von Klemmschrauben an den tiefgezogenen Seitenflächen 28 angebracht. Diese Klemmschrauben sind genügend lang, um durch Ein- und Ausschrauben eine Fixierung des Tragelements 17 gegenüber der Grundplatte im gesamten Bereich des zuvor erwähnten Spiels in der Achsrichtung der Klemmschraube (d.h. in der Y-Richtung) zu erlauben. Aufgrund dieser Anordnung lässt sich die Gegenseitige Position des Tragelements 17 und der Grundplatte 15 innerhalb eines gegebenen Spiels beliebig in X- und Y-Richtung justieren. Über die Justierelemente 30 lässt sich eine gewählte Position provisorisch fixieren, solange die oben erwähnten Fixierschrauben noch nicht über die Durchgangslöcher 25 auf die Grundplatte 15 eingeschraubt sind.

Die Breite der zwei Seitenflächen 28 definiert eine minimale Dämmschichtdicke. Durch oben beschriebene Einstellung von Abstand und Neigung zwischen Grundplatte 15 und Tragelement 17 ist die Position der Montageebene der Dämmschichtdicke anpassbar bezugsweise mit ihr nivellierbar.

Das Befestigungsmittel 19 ist als Dorn oder Dübel ausgebildet und dient zur Befestigung bzw. Verankerung der Grundplatte im Baukörper 13.

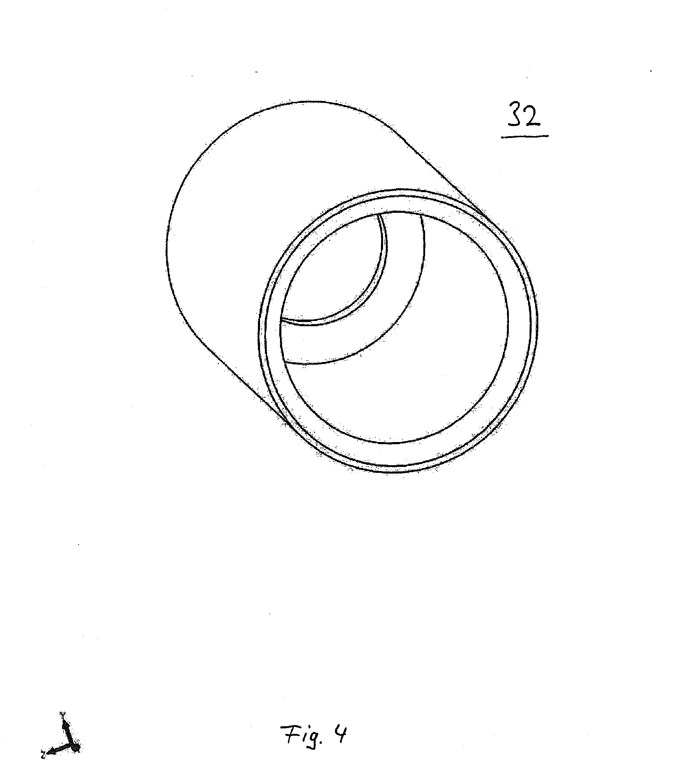

Das Montagemittel 21 ist so ausgebildet, dass es ein zu montierendes Bauteil aufnimmt. Im vorliegenden Ausführungsbeispiel kann zum Beispiel ein Schenkel eines Klobens im vorstehenden Montagemittel 21, das gemäss Figur 2 aus zwei Hälften einer Gewindehülse 31 und einer Schutzkappe 32 besteht, aufgenommen werden. Am Kloben selbst kann wiederum ein Fensterladen eingehängt werden. Die Schutzkappe 32 ist in Figur 4 dargestellt. Die Schutzkappe ist zylinderförmig und besitzt an einem Ende einen nach innen überstehenden Schutzrand.

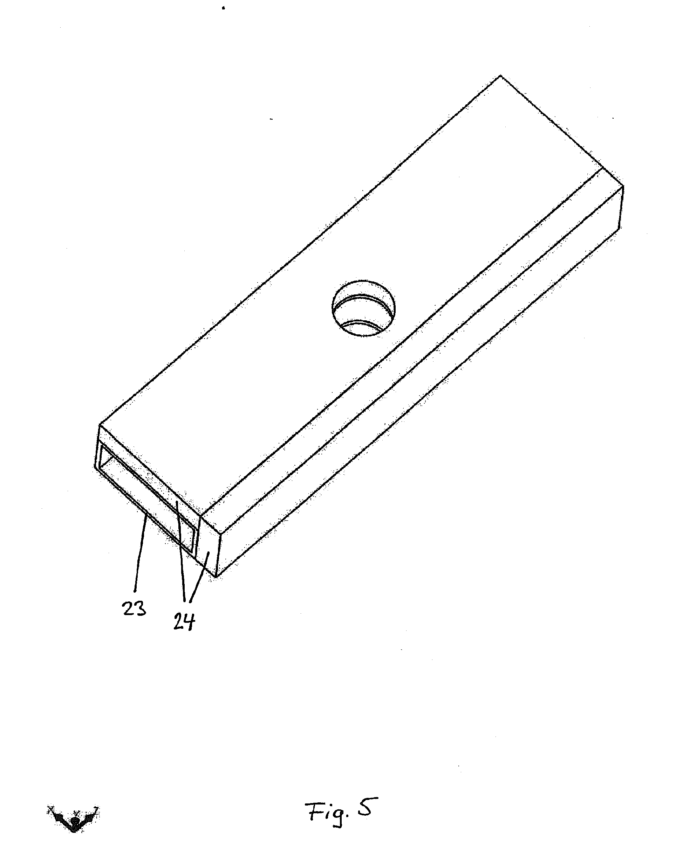

Das Montagemittel 21 kann optional zur Montage weiterer Elemente dienen. Im vorliegenden Beispiel ist ein optionales Verstärkungselement 23, hier als vierkantrohrförmiges Leibungs-Eckprofil 23 ausgeführt, aufmontiert. Das Profil besitzt eine runde Aussparung und ist auf die Gewindehülse aufgesteckt. Im Weiteren ist das Eckprofil mit Schaumstoff 24, der als Putzunterlage dient, belegt (zum Detail siehe Figur 5) und dient zur Verstärkung von Leibungskanten und zum Einstellen des Leibungslichtmasses.

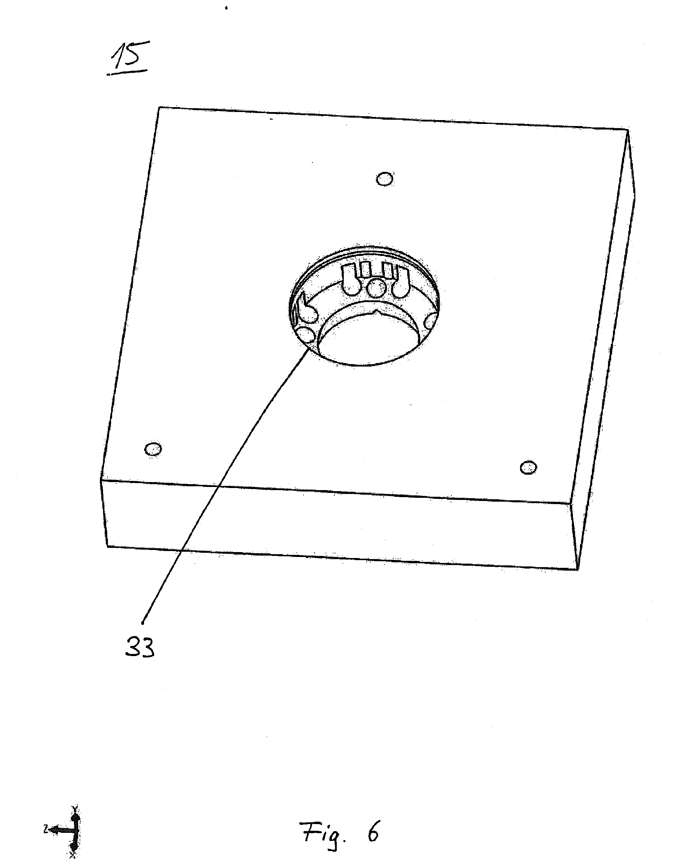

In Figur 2 ist ein Schnitt der Montagekonsole mit Baukörper zu sehen. Hier ist die gegenseitige Lage von Grundplatte 15, Tragelement 17 und Befestigungsmittel 19 dargestellt. Die Grundplatte 15 ist mit Hilfe des Befestigungsmittels 19 am Bauteil verankert. Hierzu besitzt die Grundplatte 15 ein rundes Durchgangsloch 33 mit kugelabschnittsförmiger Ansenkung (zum Detail siehe Figur 6). Der Kopf des Befestigungsmittels 19, welches vorliegend in Form eines Doms oder Dübels ausgebildet ist, versinkt in der kugelabschnittsförmigen Ansenkung des runden Durchganglochs 33.

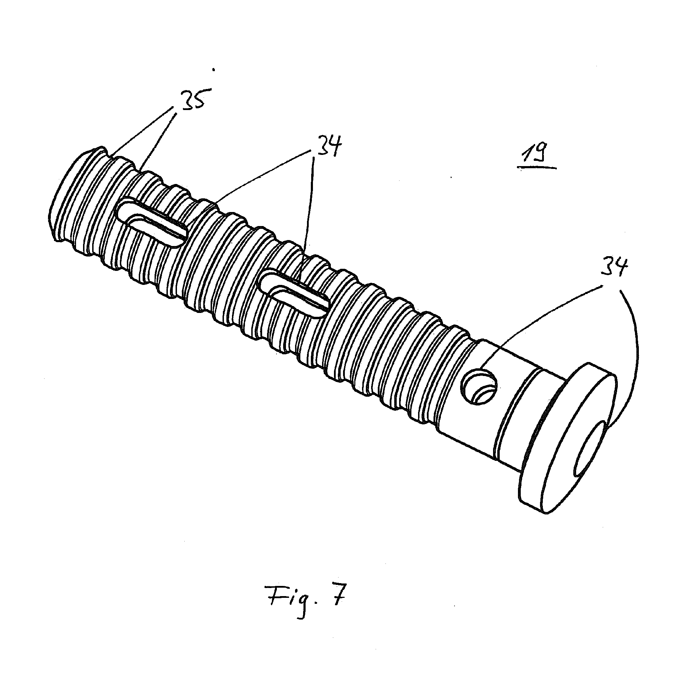

Der Dorn oder Dübel ist als Hülse ausgeführt und mit Durchbrüchen 34 und Rillen 35 versehen (zum Detail siehe Figur 7). Durch diese Durchbrüche 34 kann Mörtel in den Baukörper 13, wie zum Beispiel ein Mauerwerk, gepresst werden. Die äusseren Rillen 35 erhöhen die Verankerungsstärke des Doms. Gegebenenfalls kann ein engmaschiger elastischer Strumpf über den Dorn gestülpt werden (hier nicht dargestellt). Der O-Ring 36 dient zur Fixierung des Strumpfs, damit er beim Transport nicht abrutscht.

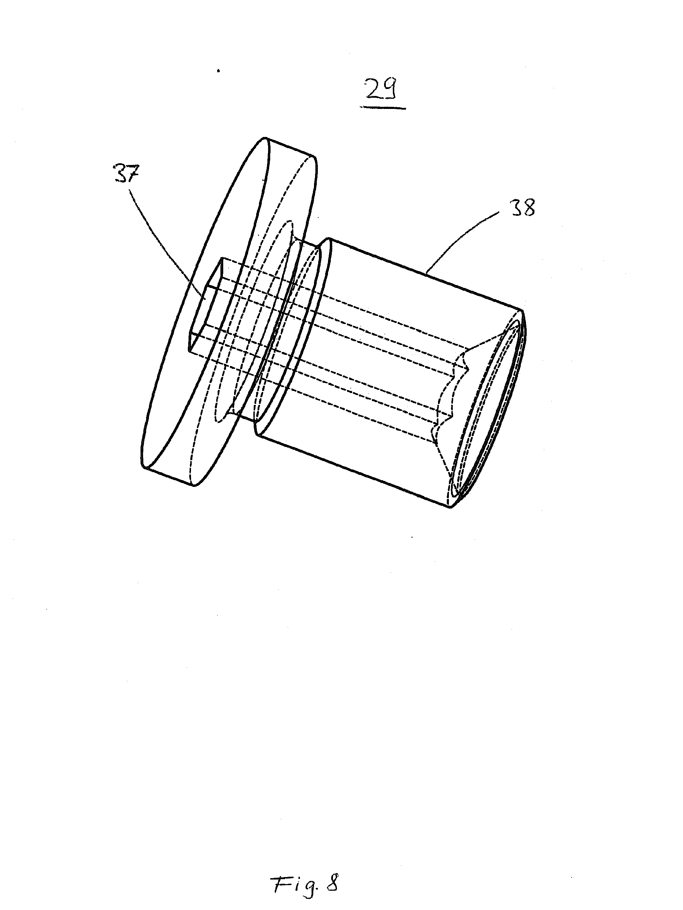

Im Weiteren ist in Figur 2 eines von drei Distanzmitteln 29 erkennbar. Das verwendete Distanzmittel 29 im Beispiel ist eine Gewindeschraube (Figur 8). Dieses ist mit einem durchgehenden Sechskantinnenprofil 37 und einem äusseren Gewinde 38 (nicht im Detail zu sehen) versehen. Die Durchgangslöcher zweiter Art 26 des Tragelements 17 besitzen ein Innengewinde, das als Gegenstück in Kommunikation mit dem Gewinde des Distanzmittels steht. Durch Drehen der drei Distanzmittel 29 mit Hilfe eines Sechskantschlüssels sind Grundplatte 15 und Tragelement 17 auseinanderdrückbar oder zusammenziehbar. Dadurch sind die Neigung zwischen Grundplatte 15 und Tragelement 17 gegenüber der Z-Achsenrichtung und der Abstand zwischen Grundplatte 15 und Tragelement 17 in der Z-Achsenrichtung justierbar. Um den Auflagendruck der Gewindeschraube 29 auf der Grundplatte 15 zu verteilen kann die Gewindeschraube 29 mit einem erweiterten Fuss- oder Kopfende ausgeführt sein. Die in Figur 8 gezeigte Gewindeschraube 29 ist derart ausgeführt, dass zum Verstellen der Gewindeschraube 29 auch am kopflosen Schaftende eine Werkzeugangriffsstruktur vorhanden ist. Aufgrund dieser Gewindeschraubenform mit durchgehendem Sechskantinnenprofil ist die Zugänglichkeit der Gewindeschraube von der Konsolenfläche 27 her durch das Durchgangsloch 26 des Tragelements gegeben.

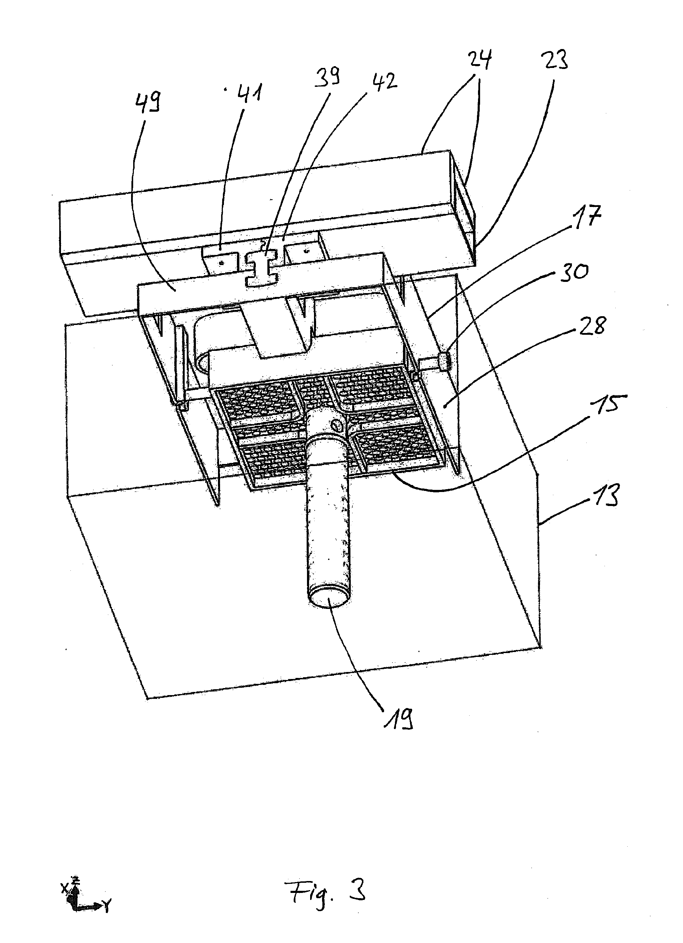

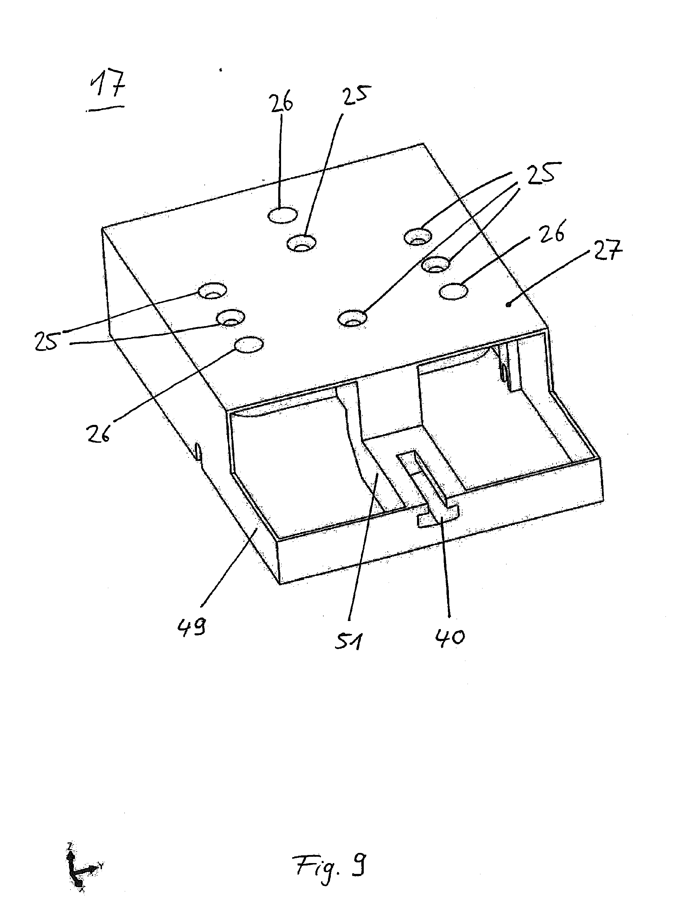

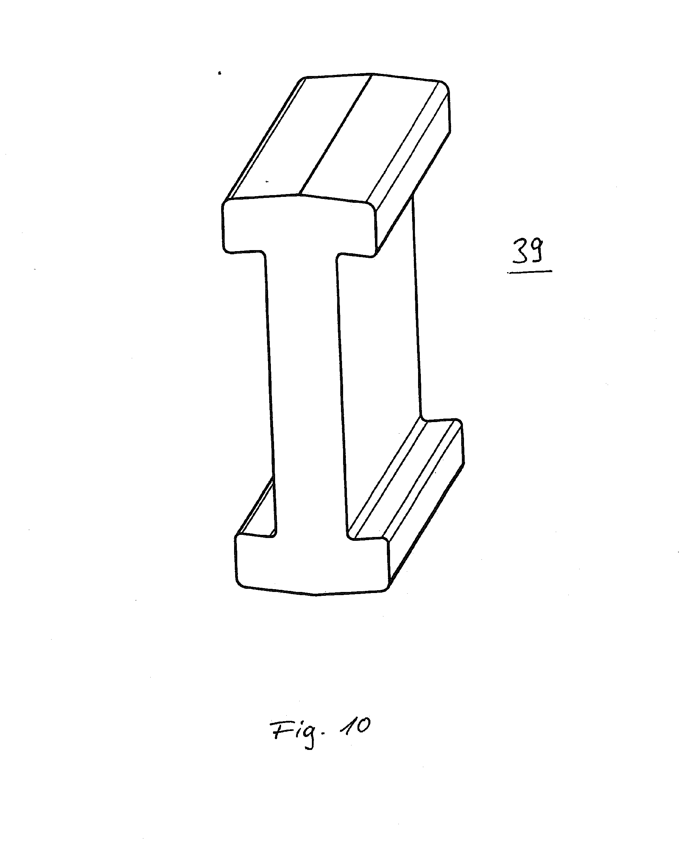

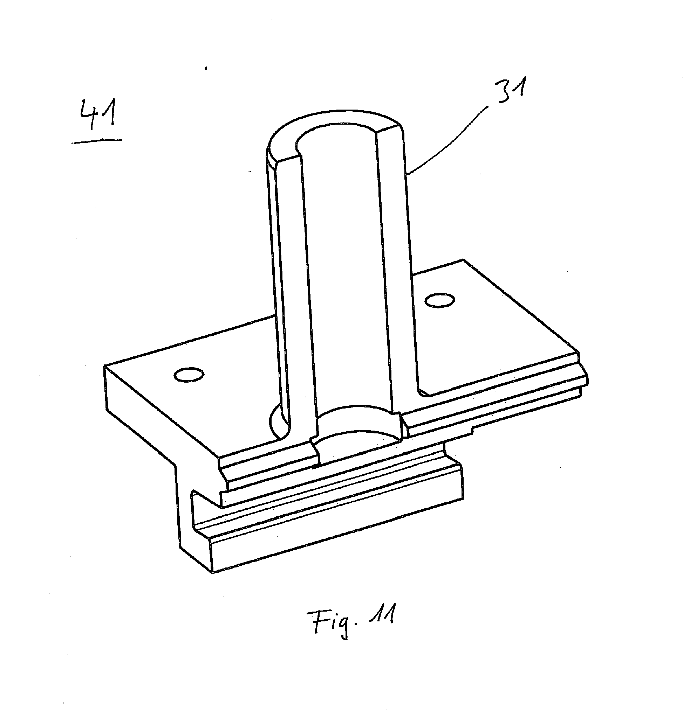

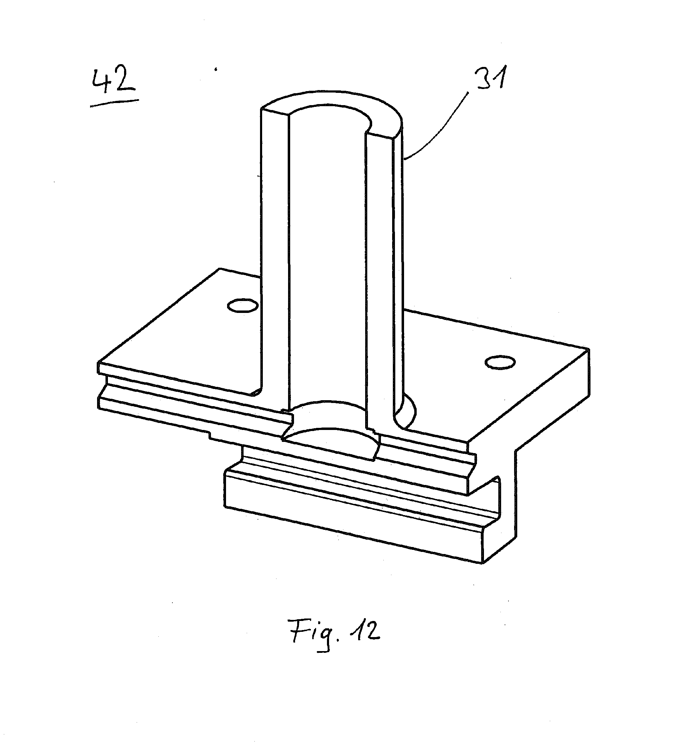

In Figuren 2 und 3 ist die Haltestruktur zwischen Montagemittel 21 und Tragelement 17 erkennbar. Die untere T-Seite eines Doppel-T-Zugelements 39 sitzt in einer Zugschiene 40 des Tragelements 17 (zum Detail siehe Figuren 9, 10 und 14). Um die obere T-Seite des Zugelements 39 sind Backenflansche 41 und 42 formschlüssige gelagert. Jeder Backenflansch trägt eine Hälfte der Gewindehülse 31 (zum Detail siehe Figuren 11 und 12). Eine Schutzkappe 32 ist über die zwei Gewindehülsenhälften gestülpt und verleiht dem Aufbau Zusammenhalt. Die zwei Gewindehülsenhälften bilden zusammengesetzt die Gewindehülse 31. Schutzkappe 32 und Gewindehülse 31 zusammen bilden das oben genannte Montagemittel 21.

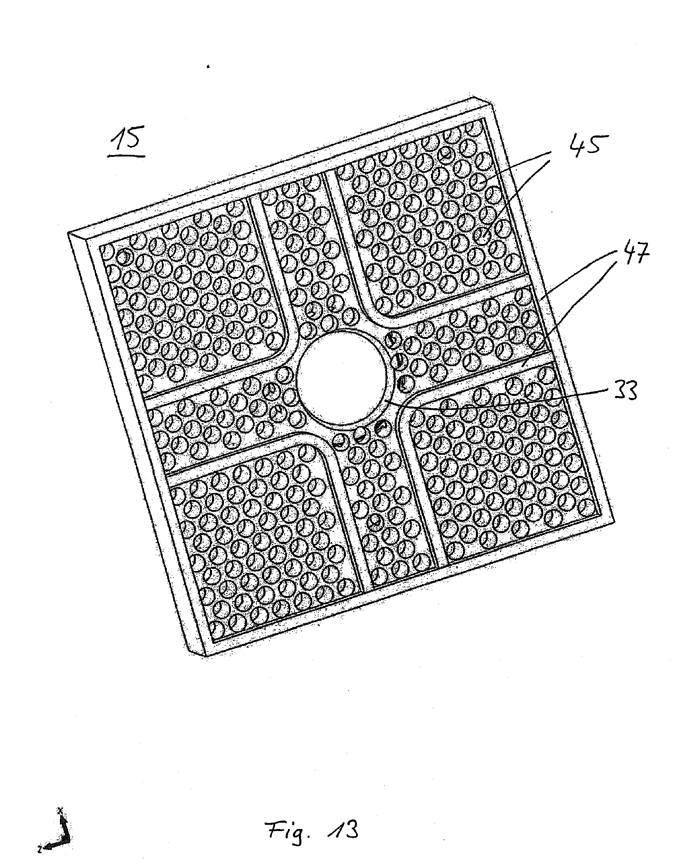

In Figur 3 ist die Montagekonsole 11 baukörperseitig mit Grundplatte 15 und Tragelement 17 dargestellt. Die Grundplatte 15 weist baukörperseitig eine Lochstruktur 45 mit Verstrebungen 47 auf (siehe auch Figur 13). Mit Hilfe der Justiermittel 30 ist die Grundplatte gegenüber dem Tragelement - wie oben beschrieben - ausrichtbar. Das Verstärkungselement 23 ist auf einem Tragelementfortsatz 49 montiert. Das Befestigungsmittel 19 fixiert die Grundplatte 15 am Baukörper, welcher hier transparent dargestellt ist.

In Figur 13 ist die Grundplatte in einer baukörperseitig perspektivischen Darstellung gezeigt. Mittig ist ein Loch 33 mit kugelabschnittsförmiger Ansenkung ausgebildet. Diese Ausführungsart erlaubt eine feste Verbindung der Grundplatte 15 mit dem Baukörper 13 auch bei leicht schräg im Baukörper 13 angebrachtem Befestigungsmittel 19. Die Verstrebungen 47 sind in zum mittigen Loch 33 hin- und wegführenden Linien und in den Konturen der Grundplatte folgenden Linien angelegt, um eine befestigungstechnisch möglichst optimale Kraftverteilung zu gewährleisten. Die Plattenstruktur besteht aus einer einseitig, baukörperseitig offenen Lochstruktur 45. Löcher, welche in die Ansenkung münden, sind aus herstellungstechnischen Gründen zum Teil beidseitig offen. Gemäss Figur 6 weist die Grundplatte montageseitig im Wesentlichen eine ebene Fläche auf, hier auch als Befestigungsebene bezeichnet, die zur Verschraubung mit dem Tragelement 17 dient.

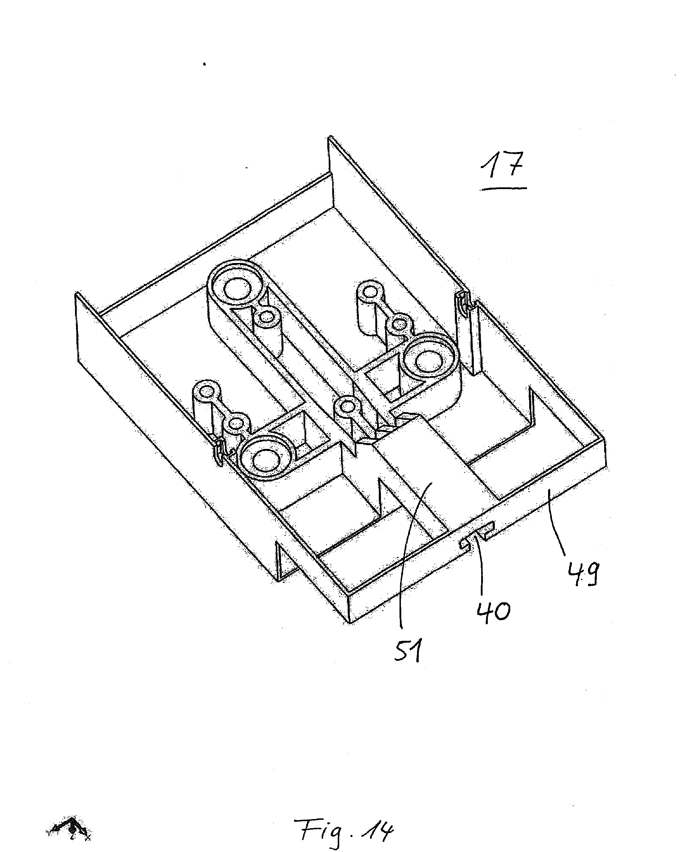

In Figuren 9 und 14 ist das Tragelement 17 mit Tragelementfortsatz 49 gezeigt. Auf dem Tragelementfortsatz 49 befindet sich eine Zugschiene 40 in Form einer Aussparung in einem Verbindungsbalken 51 zwischen Tragelementhauptkörper und Tragelementfortsatz 49. Die Durchgangslöcher 26 zweiter Art zur Justierung mit Distanzmittel 29 und die Durchgangslöcher 25 erster Art zur Fixierung des Tragelements 17 auf der Grundplatte 15 setzten sich auf der Tragelementunterseite als Rippenstrukturen fort, wie in Figur 14 zu sehen ist. Diese Struktur des Tragelements 17 hat den Vorteil einer guten Formstabilität.

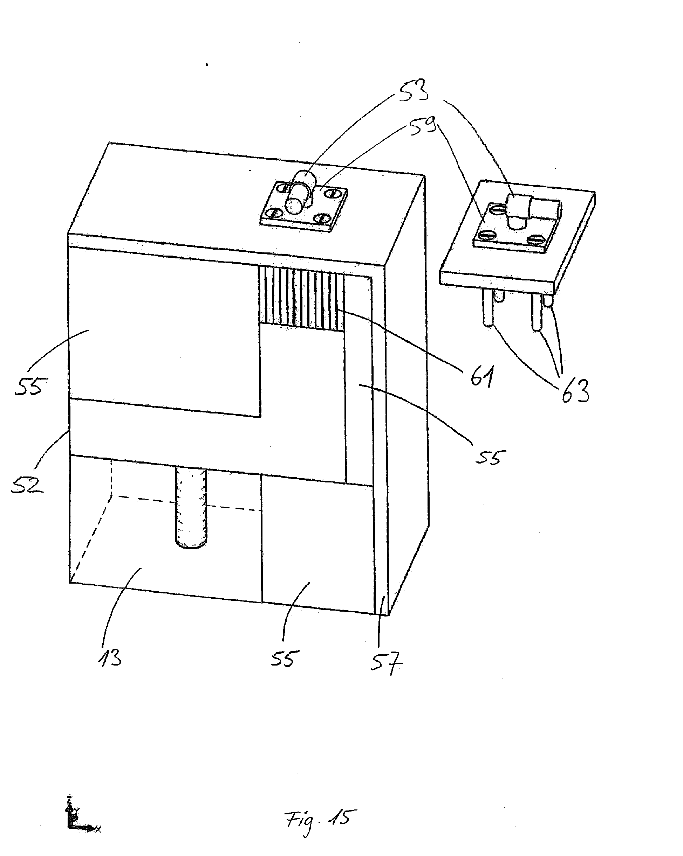

Figur 15 zeigt schematisch eine weitere Ausführungsform einer Montagekonsole 52. Die Montagekonsole 52 ist am transparent dargestellten Baukörper 13 befestigt. An der Montagekonsole 52 ist der Kloben 53 montiert. Hier sind zusätzlich zu Montagekonsole 52 und Baukörper 13 am Bauplatz angepasste Dämmschichten 55 und die deckende Fassadenbeschichtung 57 eingezeichnet. Elemente der Montagekonsole 52, wie zum Beispiel Grundplatte und Tragelement, sind hier nicht separat dargestellt. Das Montagemittel ist hier als Konsole 61 ausgeführt. Diese besteht vorteilhafterweise aus formstabilem Kunststoff. Die Konsole 61 kann ähnlich wie die Grundplatte aus Waben oder Lochstruktur und gegebenenfalls Verstrebungen aufgebaut sein. Eine derartige Struktur gewährleistet eine gewisse Wärmedämmung. Die Konsole 61 bietet eine Verschraubungsgrundlage für den Klobensockel 59, der mit Hilfe von Holz- oder Blechschrauben 63 mit dem Montagemittel 61 verschraubt ist. Auf eine Gewindehülse (gemäss Figur 1) wird in dieser Ausführungsform verzichtet. Diese Ausführungsform bietet eine alternative Montagemöglichkeit für Kloben. Diese Ausführungsform erlaubt zusätzlich die Montage von Schienen für Schiebeläden.

### Befestigung der Montagekonsole und Montage

Bevor Dämmplatten (zum Beispiel EPS Dämmplatten aus expandiertem Polystyrol) an einem Baukörper 13 (zum Beispiel eine Fassadenwand aus Mauerwerk oder Beton) aufgezogen werden, wird zur Befestigung der Montagekonsole 11 erst ein Dübelloch in den Baukörper gebohrt. Daraufhin wird die Grundplatte 15 mit ihrem Durchgangsloch 33 über das Dübelloch positioniert und mit einem passenden Dübel 19 fest im Baukörper verankert. Die Tragelementstärke ist abhängig von der zu überbrückenden Fassadendämmdicke. Bei Mauerwerk wird vorzugsweise die Dübelverankerung durch Eindrücken eines Injektionsmörtels erreicht. Als Injektionsmörtel wird zum Beispiel ein mineralischer Mörtel verwendet. Vor dem Einsetzen des Dübels wird ein engmaschiger Strumpf über den Dübelschaft gezogen. Der danach durch die Dübelhülse eingespritzter Mörtel bildet so ein kompaktes, kraft- und formschlüssiges Gebilde im Baukörper 11. Dies ist vor allem bei Mauerwerken mit hohem Hohlraumanteil von Vorteil. Nach erfolgter Aushärtung des Mörtels können alle weiteren Befestigungsschritte unter Trockenbedingungen durchgeführt werden.

Abhängig von der anzubringenden Dämmdicke wird das passende Tragelement 17 gewählt. Die Seitenflächen 28 des Tragelements 17 definieren eine gewisse Dicke (in Z-Richtung) des Tragelements und somit der Montagekonsole. Die zu verwendende Dicke des Tragelements wird durch die gewünschte Dämmdicke festgelegt. Das Spiel (zum Beispiel von etwa 10 mm), das konstruktionsgemäss für die Ausrichtung des Tragelements in Z-Richtung zur Verfügung steht, ermöglicht die Feinanpassung der Montagekonsole an die Dämmschichtdicke. Die Dämmdicke selbst hängt von Baukonstruktion, Dämmaterial, zu dämmender Baukörperposition und anderem ab. Es werden zum Beispiel Leibungsdämmdicken von 0 bis 80 mm verwendet. Die Wärmedämmdicken reichen jedoch im Allgemeinen von 0 bis 300 mm, bevorzugt aber von 60 bis 200 mm.

Das passende Tragelement 17 wird auf die befestigte Grundplatte 15 aufgesetzt und über die seitlichen Justierelement 30, und die Distanzmittel 29 in drei Achsrichtungen ausgerichtet. Zum Beispiel bei der Vorbereitung einer Montage an einer Fassadenwand wird das Tragelement 17 horizontal und vertikal über das Justierelement 30 ausgerichtet. Abstand von der Wand und Neigung relativ zur Wand, bzw. die Abstimmung des Tragelements 17 auf die geplante Dämmschichtaussenfläche werden über die Distanzmittel 29 eingestellt bzw. vorgenommen. Nach erfolgter Ausrichtung werden Tragelement 17 und Grundplatte 15 fest verschraubt. Tragelement 17, Zugelement 39 und Backenflansche (41, 42) werden werkseitig zu einem untrennbaren Fertigelement zusammengesetzt und fest verschäumt. Um die nötige Festigkeit und Stabilität des Fertigelements zu erhalten wird hierzu werkseitig ein dichter Polyurethan-Schaum, vorteilhafterweise ein Polyurethan-Hartschaum mit hohem Raumgewicht, verwendet.

Nach abgeschlossener Befestigung der Montagekonsole 11 und des daran angebrachten Montagemittels 21 wird der Baukörper 13 mit Dämmmaterial abgedeckt. Vorteilhafterweise werden alle Elemente mit einer Schaumstoffdämmplatte bedeckt. Dies ist für die Fassadenputzbeschichtung von Vorteil, d.h. dadurch wird die Gefahr der Rissbildung in der Fassadenbeschichtung verringert und werden die Haftungseigenschaften der Beschichtung verbessert. Die Montagekonsole 11 wird hierbei in die Dämmschicht integriert. Daraufhin erhält der Baukörper 13 die Fassadenbeschichtung. Diese bedeckt Dämmmaterial und Montagekonsole 11 gleichermassen. Nur das Gewinde der Gewindehülse 31 mit Schutzkappe 32 bleibt sichtbar und zugänglich.

Abschliessend können zum Beispiel Kloben und Fensterläden montiert werden. Diese Endmontage kann zu einem späteren Zeitpunkt durchgeführt werden und ist reversibel.

Wird ein Montagemittel 61, das aus einer Kunststoffstruktur besteht, verwendet, können nach Fertigstellung der Fassadenbeschichtung Kloben oder Schienen ins Montagemittel 61 frei eingeschraubt werden. Zur Montage von, z.B. Kloben für Drehladen oder Schienen für Schiebeladen, werden Schrauben durch die Fassadenbeschichtung ins Kunststoffstrukturteil gedreht. Schienen oder Klobensockel können somit direkt mit dem Kunststoffstrukturelement verschraubt werden.

Zusammenfassend ist zu bemerken, dass Montagekonsolen 11, 52 so aufgebaut sind, dass nach Befestigung und Montage eine optimale wärmebrückenfreie Dämmung vorliegt. Diese kommt dadurch zustande, dass zwischen dem Befestigungsmittel 19, wie zum Beispiel einem Dübel, und dem montierten Bauteil, wie zum Beispiel einem Kloben und einer daran befestigten Fensterlade, kein direkter Kontakt besteht. Durch die vorliegende Tragelementkonstruktion, insbesondere mit Tragelementfortsatz 49, sind metallische Teile, insbesondere das Befestigungsmittel 19 und das montierte Bauteil, deutlich voneinander entfernt positioniert. Zudem reichen beide metallischen Teile nur zu einem geringen Anteil in die Dämmschicht hinein. Dazwischenliegende Elemente könne aus gering wärmeleitfähigen Materialien, wie Spritzkunststoff, hergestellt werden. Gegebenenfalls verwendete Metallschrauben zur Befestigung des Tragelements 17 an der Grundplatte 15 stehen weder mit dem Befestigungsmittel 19 noch dem montierten Bauteil in wärmeleitender Verbindung.

### Legende:

- 11: Montagekonsole
- 13: Baukörper
- 15: Grundplatte
- 17: Tragelement
- 19: Befestigungsmittel
- 21: Montagemittel
- 23: Verstärkungselement
- 24: Schaumstoff
- 25: Durchgangslöcher erster Art
- 26: Durchgangslöcher zweiter Art
- 27: Konsolenfläche
- 28: Seitenflächen
- 29: Distanzmittel
- 30: Justierelemente
- 31: Gewindehülse
- 32: Schutzkappe
- 33: Durchgangsloch mit kugelabschnittsförmiger Ansenkung
- 34: Durchbrüche
- 35: Rillen
- 36: O-Ring
- 37: Sechskantprofil
- 38: Äusseres Gewinde
- 39: Zugelement
- 40: Zugschiene
- 41,42: Backenflansche
- 45: Lochstruktur
- 47: Verstrebungen
- 49: Tragelementfortsatz
- 51: Verbindungsbalken
- 52: Montagekonsole
- 53: Kloben
- 55: Dämmschichtmaterial
- 57: Fassadenbeschichtung
- 59: Klobensockel
- 61: Montagemittel
- 63: Holz- oder Blechschraube

## Patentansprüche

1. Montagekonsole (11, 52) zur Montage von Bauteilen, insbesondere von Kloben für Fensterläden, an einem Baukörper beinhaltend
- eine Grundplatte (15) mit mindestens einer Aufnahme (33) für ein Befestigungsmittel (19) zur Befestigung der Grundplatte (15) an einem Baukörper (13), wobei die Seite der Grundplatte (15), welche an den Baukörper (13) anliegt, als Befestigungsebene definiert ist, und
- ein der Grundplatte (15) aufsetzbares Tragelement (17) mit einer Konsolenfläche (27), welche an der der Grundplatte (15) abgewandten Seite des Tragelements (17) liegt, wobei im Wesentlichen parallel zur Konsolenfläche (27) sich eine mit dem Tragelement (17) gekoppelte Montageebene erstreckt,
**dadurch gekennzeichnet**
**dass** zwischen Grundplatte (15) und Tragelement (17) mehrere verstellbare Distanzmittel angeordnet sind, über welche Abstand und Neigung zwischen Befestigungsebene und Montageebene einstellbar ist.

2. Montagekonsole nach Anspruch 1 **dadurch gekennzeichnet, dass** mindestens drei Distanzmittel (29) vorhanden sind, welche eine Dreipunktauflage bilden.

3. Montagekonsole nach vorhergehendem Anspruch 2 **dadurch gekennzeichnet, dass** die Distanzmittel (29) als Gewindeschrauben ausgestaltet sind.

4. Montagekonsole nach einem der vorhergehenden Ansprüche **dadurch gekennzeichnet, dass** die Grundplatte (15)
- eine Dicke von mindestens 15 mm, bevorzugt 20-25 mm, aufweist und/oder
- mit aufgesetztem Tragelement (17) eine Dicke von 40-300 mm, bevorzugt 60-300 mm, aufweist.

5. Montagekonsole nach einem der vorhergehenden Ansprüche **dadurch gekennzeichnet, dass** die Grundplatte (15)
- Verstrebungen (47) aufweist und/oder
- eine Lochstruktur (45) aufweist, wobei die Löcher senkrecht zur Ausdehnungsebene der Grundplatte (15) verlaufen und die Mehrheit der Löcher nicht durchgehend ist.

6. Montagekonsole nach einem der vorhergehenden Ansprüche **dadurch gekennzeichnet, dass** die Grundplatte (15) aus einem Spritzkunststoff besteht.

7. Montagekonsole nach einem der vorhergehenden Ansprüche **dadurch gekennzeichnet, dass** die Aufnahme in der Grundplatte als mindestens ein durchgehendes Loch (33) mit Ansenkung ausgebildet ist.

8. Montagekonsole nach einem der vorhergehenden Ansprüche **dadurch gekennzeichnet, dass** das Befestigungsmittel (19) aus einem Dorn besteht, welcher Dorn gegebenenfalls
- aus Schaftteil und Kopfteil besteht, wobei das Kopfteil breiter als das Schaftteil und kugelabschnittsförmig ausgebildet ist, und/oder
- als Hülse mit Durchbrüchen (34) ausgeführt ist.

9. Montagekonsole nach einem der vorhergehenden Ansprüche **dadurch gekennzeichnet, dass** das Tragelement (17) Durchgangslöcher erster Art (25) zur Aufnahme von Verbindungsmitteln zur gegenseitigen kraftschlüssigen Verbindung von Tragelement (17) und Grundplatte (15) aufweist.

10. Montagekonsole nach einem der vorhergehenden Ansprüche **dadurch gekennzeichnet, dass** das Tragelement (17) Durchgangslöcher zweiter Art (26) zur Aufnahme der Distanzmittel (29) enthält, wobei die Durchgangslöcher zweiter Art (26) zur Aufnahme der Distanzmittel (29) gegebenenfalls mit Gewinde ausgeführt sind.

11. Montagekonsole nach einem der vorhergehenden Ansprüche **dadurch gekennzeichnet, dass** das Tragelement (17) mit mindestens einem Montagemittel (21, 61) zur Montage der Bauteile ausgeführt ist.

12. Montagekonsole nach einem der vorhergehenden Ansprüche **dadurch gekennzeichnet, dass** das Tragelement (17) auf mindestens einer von zwei sich gegenüberliegenden und zur Konsolenfläche (27) senkrecht liegenden Seiten einen Tragelementfortsatz (49) zur Befestigung eines Montagemittels (21, 61) aufweist.

13. Montagekonsole nach einem der vorhergehenden Ansprüche **dadurch gekennzeichnet, dass** das Tragelement (17) eine Zugschiene (40) aufweist, die ein Zugelement (39) aufnimmt, das wiederum zwei sich ineinanderfügbare Backenflansche (41, 42) aufnimmt, wobei die Backenflansche (41, 42) gegebenenfalls mit Fortsätzen in Form von Teilen einer Gewindehülse ausgeführt sind.

14. Montagekonsole nach dem vorhergehenden Anspruch 11 **dadurch gekennzeichnet, dass**
- das Montagemittel (21) aus einer Gewindehülse (31) und einer Schutzkappe (32) besteht oder
- das Montagemittel (61) aus einer formstabilen Struktur mit Waben- oder Lochstruktur und/oder mit Verstrebungen besteht.

15. Montagekonsole nach einem der vorhergehenden Ansprüche **dadurch gekennzeichnet, dass** das Tragelement (17) auf zwei weiteren sich gegenüberliegenden und zur Konsolenflächen (27) senkrecht liegenden Seitenflächen (28) Justierelemente (30) zur gegenseitigen Positionierung von Grundplatte (15) und Tragelement (17) aufweist.
